# EUROPÄISCHE PATENTANMELDUNG

(11) **EP 1 052 760 A2**
(43) Veröffentlichungstag der Anmeldung: **15.11.2000**
(21) Anmeldenummer: 00250141.9
(22) Anmeldetag: 11.05.2000
(51) Int. Cl.: H02J 13/00, H04L 12/28

(54) **Can-Bus-System mit bei Störungen automatisch abschaltbaren Teilnetzen**

(30) Priorität: 14.05.1999 DE 19922408
(71) Anmelder: Volkswagen Aktiengesellschaft, 38436 Wolfsburg (DE)
(72) Erfinder: Lübke, Andreas, 38442 Wolfsburg (DE); Stock, Friedrich, 38442 Wolfsburg (DE)
(74) Vertreter: Effert, Bressel und Kollegen

(57) **Zusammenfassung**

Es wird ein CAN-Bus-System für ein Kraftfahrzeug mit einem in mehrere Teilnetze (20, 30, 40, 50) gegliederten CAN-Netz beschrieben. Um auf relativ kostengünstige Weise zu erreichen, daß das CAN-Bus-System im Falle einer Störung, insbesondere im Falle eines durch einen Unfall verursachten Kurzschlusses, zumindest teilweise funktionsfähig bleibt, ist vorgesehen, daß jedes Teilnetz einen Schalter (24, 34, 44 bzw. 54) aufweist, durch den es von dem restlichen CAN-Netz abtrennbar ist, wobei den Teilnetzen (20, 30, 40, 50) eine gemeinsame Überwachungseinrichtung (6) zugeordnet ist, welche über einen Transceiver (7) mit allen Teilnetzen (20, 30, 40, 50) verbunden ist, die Kommunikation auf den Teilnetzen überwacht und bei Auftreten einer Störung in einem der Teilnetze das die Störung aufweisende Teilnetz mittels des diesem Teilnetz zugeordneten Schalters (24, 34, 44 bzw. 54) vom restlichen CAN-Netz abtrennt.

## Beschreibung

Die Erfindung betrifft ein CAN-Bus-System für ein Kraftfahrzeug mit einem in mehrere Teilnetze gegliederten CAN-Netz.

Zur Steigerung des Fahrkomforts sowie der Fahrsicherheit werden in Kraftfahrzeugen immer mehr elektrische und elektronische Systeme verwendet. Um den Umfang der dafür erforderlichen Kabelbäume zu verringern oder zumindest zu begrenzen werden im Kraftfahrzeugbau zunehmend Bus-Strukturen eingesetzt. Ein eigens für den Einsatz in Kraftfahrzeugen entwickeltes Bus-System ist das sogenannte CAN-Bus-System (CAN = controller area network). Das CAN-Bus-System umfaßt eine mehrere CAN-Knoten verbindende Busleitung, die aus zwei parallelen Leitungen CAN-Low und CAN-High gebildet ist. Hinsichtlich des genauen Aufbaus und der Funktionsweise eines CAN-Bus-Systems wird auf die Zeitschrift ELRAD, 1991, Heft 1, Seiten 42-66 und die DE 41 26 850 A1 verwiesen.

Das CAN-Bus-System ist im allgemeinen relativ unempfindlich gegen Störungen an einer der beiden Leitungen CAN-Low oder CAN-High, wobei die Störungen in Form einer Unterbrechung, eines Kurzschlusses gegen Masse oder eines Kurzschlusses gegen Versorgungsspannung auftreten können. Treten jedoch Störungen an beiden Leitungen auf, so ist kein Datenverkehr mehr möglich, da das Zugriffsverfahren des CAN-Bus-Systems bedingt, daß die CAN-Low- und CAN-High-Anschlüsse aller CAN-Knoten galvanisch miteinander verbunden sind. Solche Störungen können insbesondere durch einen Unfall verursacht werden.

Aus der US-Patentschrift 5 818 673 ist ein Stromverteilungssystem für ein Kraftfahrzeug bekannt, das eine Vielzahl von Stromverteilungsabschnitten zur Stromversorgung elektrischer Lasten aufweist. Die Stromversorgungsabschnitte werden jeweils über elektrische Leitungen mit Strom aus einer eine Lichtmaschine und eine Batterie aufweisenden Stromzufuhreinrichtung versorgt und leiten den Strom über elektrische Zweigleitungen an die elektrischen Lasten. Die Stromversorgungsabschnitte sind mit einer Vielzahl von Stromdetektoren zur Erfassung des Stroms in den elektrischen Leitungen und Zweigleitungen, mit mehreren Schaltern zur Unterbrechung der Verbindung zwischen den elektrischen Leitungen und Zweigleitungen einerseits und den elektrischen Lasten andererseits und mit einer Steuereinheit zum Steuern der Schalter versehen, wobei die Steuereinheit mit den Stromdetektoren verbunden ist und bei Auftreten eines abnormalen Stromwertes in einer der elektrischen Leitungen oder Zweigleitungen die betreffende Leitung von dem restlichen Stromverteilungssystem abtrennt. Dieses bekannte System kann einen Funktionsausfall aller elektrischen Komponeneten im Falle einer durch einen Unfall verursachten Störung verhindern. Das System ist jedoch relativ aufwendig und entsprechend teuer.

Aufgabe der vorliegenden Erfindung ist es, ein CAN-Bus-System der eingangs genannten Art zu schaffen, welches im Falle einer Störung, insbesondere im Falle eines durch einen Unfall verursachten Kurzschlusses, zumindest teilweise funktionsfähig bleibt, wobei diese Aufgabe auf relativ kostengünstige Weise gelöst werden soll.

Die Lösung dieser Aufgabe besteht erfindungsgemäß darin, daß jedes Teilnetz einen Schalter aufweist, durch den es von dem restlichen CAN-Netz abtrennbar ist, wobei den Teilnetzen eine gemeinsame Überwachungseinrichtung zugeordnet ist, welche über einen Transceiver mit allen Teilnetzen verbunden ist, die Kommunikation auf den Teilnetzen überwacht und bei Auftreten einer Störung in einem der Teilnetze das die Störung aufweisende Teilnetz mittels des diesem Teilnetz zugeordneten Schalters vom restlichen CAN-Netz abtrennt.

Die erfindungsgemäße Lösung zeichnet sich dadurch aus, daß ein gattungsgemäßes CAN-Bus-System mit nur wenigen zusätzlichen Komponenten ergänzt und somit auf vergleichsweise kostengünstige Weise dahingehend verbessert wird, daß bei Auftreten einer Störung eine automatische Abtrennung des von der Störung betroffenen Netzteils erfolgt und damit die Funktionsfähigkeit des restlichen CAN-Netzes erhalten bleibt. Vorteilhaft ist es ferner, daß im Normalbetrieb des erfindungsgemäßen CAN-BusSystems keine zusätzliche Rechenleistung benötigt wird.

Die Überwachungseinrichtung des erfindungsgemäßen CAN-Bus-Systems kann vorzugsweise einen BUS-Controller in Form eines Mikrocontrollers aufweisen.

Nach einer weiteren bevorzugten Ausgestaltung ist vorgesehen, daß die Überwachungseinrichtung bei Auftreten einer Störung die Teilnetze nacheinander abschaltet und jeweils eine oder mehrere Testbotschaften über das restliche CAN-Netz sendet, wobei die Fortsetzung des Abschaltvorgangs beendet wird und das momentan abgeschaltete Teilnetz abgetrennt bleibt, sobald die Überwachungseinrichtung feststellt, daß die Testbotschaft bzw. Testbotschaften korrekt gesendet und empfangen wurden.

Eine alternative Ausgestaltung des erfindungsgemäßen CAN-Bus-Systems ist dadurch gekennzeichnet, daß die Überwachungseinrichtung bei Auftreten einer Störung alle Teilnetze abschaltet und die Teilnetze nacheinander einzeln testet, wobei nach Abschluß des Tests aller Teilnetze die Schalter derjenigen Teilnetze wieder geschlossen werden, in denen keine Störung festgestellt wurde.

Eine weitere bevorzugte Ausgestaltung besteht darin, daß die Schalter der Teilnetze jeweils ein Relais und zwei Schaltkontakte aufweisen, wobei der eine Schaltkontakt in der CAN-Low-Leitung und der andere Schaltkontakt in der CAN-High-Leitung des Teilnetzes angeordnet ist, und wobei das Relais über eine Steuerleitung mit der Überwachungseinrichtung verbunden ist.

Nach einer weiteren Ausgestaltung kann das CAN-Netz vorzugsweise in vier Teilnetze gegliedert sein. Diese Ausgestaltung ermöglicht es, vier Bereiche des Kraftfahrzeugs voneinander abzugrenzen, vorzugsweise die Bereiche vorne links, vorne rechts, hinten links und hinten rechts, so daß bei einem einseitigen Auffahrunfall gegebenenfalls die in den davon nicht betroffenen Bereichen angeordneten elektrischen Komponenten des Kraftfahrzeugs weiterhin funktionsfähig bleiben.

Nachfolgend wird die Erfindung anhand einer ein Ausführungsbeispiel darstellenden Zeichnung näher erläutert.

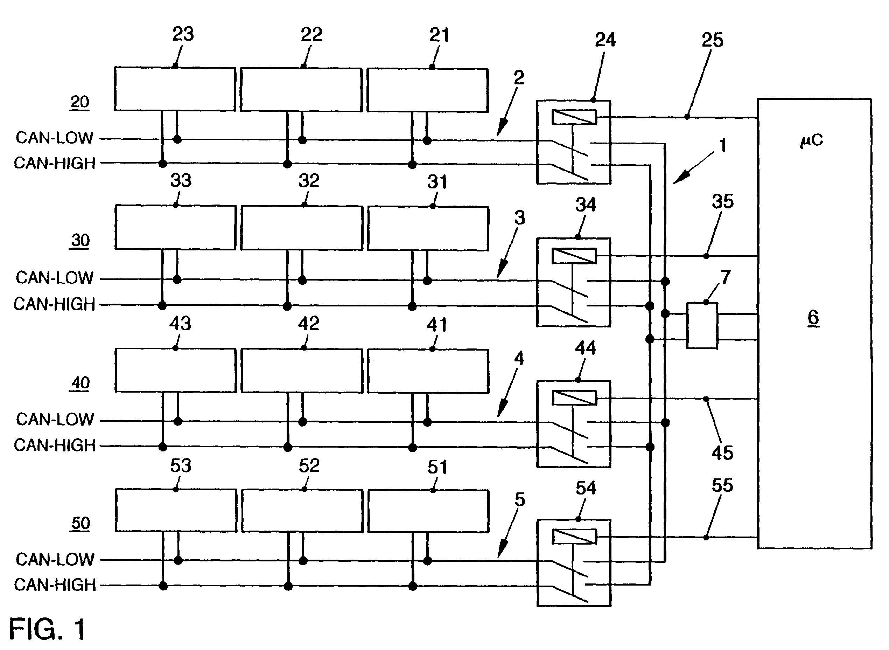

Die einzige Figur der Zeichnung zeigt eine Prinzipdarstellung des erfindungsgemäßen CAN-Bus-Systems zum Einsatz in einem Kraftfahrzeug.

Das schematisch dargestellte CAN-Bus-System umfaßt eine aus zwei parallelen Leitungen CAN-Low und CAN-High gebildete bidirektionale Busleitung 1, von der vier Zweige 2, 3, 4 und 5 abgehen. Jeder Zweig definiert ein Teilnetz, wobei das erste Teilnetz 20 dem vorderen linken Bereich des Kraftfahrzeugs, das zweite Teilnetz 30 dem vorderen rechten Bereich des Kraftfahrzeugs, das dritte Teilnetz 40 dem hinteren linken Bereich des Kraftfahrzeugs und das vierte Teilnetz 50 dem hinteren rechten Bereich des Kraftfahrzeugs zugeordnet ist. Jedes Teilnetz weist mehrere Anschlußstellen, sogenannte CAN-Knoten 21, 22, 23; 31, 32, 33; 41, 42, 43; 51, 52, 53 auf, die den verschiedenen Fahrzeuglichtern wie etwa dem Blinklicht, dem Abblendlicht, dem Fernlicht, dem Standlicht, dem Schlußlicht, dem Bremslicht usw. zugeordnet sind.

Erfindungsgemäß weist jedes der Teilnetze 20, 30, 40, 50 einen Schalter 24, 34, 44 bzw. 54 auf, durch den es von dem restlichen CAN-Netz abgetrennt werden kann. Im Normalzustand sind sämtliche Schalter 24, 34, 44, 54 geschlossen. Die Schalter sind so ausgelegt, daß ein bidirektionaler Datenverkehr möglich ist und beim Öffnen eines Schalters beide Leitungen des jeweiligen Teilnetzes 20, 30, 40 bzw. 50 abgetrennt werden. In dem dargestellten Ausführungsbeispiel bestehen die Schalter 24, 34, 44, 54 aus einem Relais und zwei Schaltkontakten, wobei der eine Schaltkontakt in der CAN-Low-Leitung und der andere Schaltkontakt in der CAN-High-Leitung des jeweiligen Teilnetzes 20, 30, 40 bzw. 50 angeordnet ist. Das Relais jedes Schalters ist über eine Steuerleitung 25, 35, 45 bzw. 55 mit einer Überwachungseinrichtung 6 verbunden, die einen Buscontroller in Form eines Mikrokontrollers aufweist und über einen Transceiver 7 mit der CAN-Low-Leitung und der CAN-High-Leitung der Busleitung 1 verbunden ist. Im Normalzustand sind somit alle CAN-Knoten 21, 22, 23; 31, 32, 33; 41, 42, 43; 51, 52, 53 einschließlich der Überwachungseinrichtung 6 miteinander verbunden und können miteinander kommunizieren.

Der Buscontroller überwacht die Kommunikation auf dem CAN-Bus und dessen Teilnetzen 20, 30, 40, 50. Ist die Kommunikation gestört, beispielsweise weil infolge eines Unfalls in einem der Teilnetze 20, 30, 40, 50 oder in einem der CAN-Knoten 21, 22, 23; 31, 32, 33; 41, 42, 43; 51, 52, 53 ein Kurzschluß gegen Masse oder gegen Versorgungsspannung vorhanden ist, so wird diese Störung vom Buscontroller der Überwachungseinrichtung 6 erfaßt und das betreffende Teilnetz mittels des zugeordneten Schalters vom restlichen CAN-Netz automatisch abgetrennt. Die Abschaltung erfolgt vorzugsweise in der Weise, daß die Überwachungseinrichtung 6 beim Erkennen einer Störung nacheinander die Teilnetze 20, 30, 40, 50 abschaltet und Testbotschaften über das restliche CAN-Netz sendet. Können diese Testbotschaften korrekt gesendet und empfangen werden, so ist das momentan abgetrennte Teilnetz das fehlerhafte. Dieses Teilnetz bleibt dann vom Rest des CAN-Netzes abgetrennt, während der Datenverkehr über den intakten Rest des CAN-Netzes weiterlaufen kann.

Alternativ kann die Abschaltung eines fehlerhaften Teilnetzes auch in der Weise erfolgen, daß die Überwachungseinrichtung 6 beim Erkennen einer Störung alle Teilnetze 20, 30, 40, 50 abschaltet und die Teilnetze dann nacheinander einzeln testet, wobei nach Abschluß des Tests aller Teilnetze 20, 30, 40, 50 die Schalter derjenigen Teilnetze wieder geschlossen werden, in denen keine Störung festgestellt wurde.

## Patentansprüche

1. CAN-Bus-System für ein Kraftfahrzeug mit einem in mehrere Teilnetze gegliederten CAN-Netz,
dadurch gekennzeichnet ,
daß jedes Teilnetz (20, 30, 40, 50) einen Schalter (24, 34, 44, 54) aufweist, durch den es von dem restlichen CAN-Netz abtrennbar ist, wobei den Teilnetzen (20, 30, 40, 50) eine gemeinsame Überwachungseinrichtung (6) zugeordnet ist, welche über einen Transceiver (7) mit allen Teilnetzen (20, 30, 40, 50) verbunden ist, die Kommunikation auf den Teilnetzen (20, 30, 40, 50) überwacht und bei Auftreten einer Störung in einem der Teilnetze das die Störung aufweisende Teilnetz mittels des diesem Teilnetz zugeordneten Schalters vom restlichen CAN-Netz abtrennt.

2. CAN-Bus-System nach Anspruch 1,
dadurch gekennzeichnet ,
daß die Überwachungseinrichtung (6) einen BUS-Controller aufweist.

3. CAN-Bus-System nach Anspruch 1 oder 2,
dadurch gekennzeichnet ,
daß die Überwachungseinrichtung (6) bei Auftreten einer Störung die Teilnetze (20, 30, 40, 50) nacheinander abschaltet und jeweils eine oder mehrere Testbotschaften über das restliche CAN-Netz sendet, wobei die Fortsetzung des Abschaltvorgangs beendet wird und das momentan abgeschaltete Teilnetz abgetrennt bleibt, sobald die Überwachungseinrichtung feststellt, daß die Testbotschaft bzw. Testbotschaften korrekt gesendet und empfangen wurden.

4. CAN-Bus-System nach Anspruch 1 oder 2,
dadurch gekennzeichnet ,
daß die Überwachungseinrichtung (6) bei Auftreten einer Störung alle Teilnetze (20, 30, 40, 50) abschaltet und die Teilnetze nacheinander einzeln testet, wobei nach Abschluß des Tests aller Teilnetze (20, 30, 40, 50) die Schalter derjenigen Teilnetze wieder geschlossen werden, in denen keine Störung festgestellt wurde.

5. CAN-Bus-System nach einem der Ansprüche 1 bis 4,
dadurch gekennzeichnet ,
daß die Schalter (24, 34, 44, 54) der Teilnetze (20, 30, 40, 50) jeweils ein Relais und zwei Schaltkontakte aufweisen, wobei der eine Schaltkontakt in der CAN-Low-Leitung und der andere Schaltkontakt in der CAN-High-Leitung des Teilnetzes angeordnet ist, und wobei das Relais über eine Steuerleitung (25, 35, 45, 55) mit der Überwachungseinrichtung (6) verbunden ist.

6. CAN-Bus-System nach einem der Ansprüche 1 bis 5,
dadurch gekennzeichnet ,
daß das CAN-Netz in vier Teilnetze (20, 30, 40, 50) gegliedert ist.
